Europäisches Patentamt

European Patent Office

Office européen des brevets

(19)

(11) **EP 1 221 774 A1**

(12) # EUROPEAN PATENT APPLICATION

(43) Date of publication:
**10.07.2002 Bulletin 2002/28**

(51) Int Cl.⁷: **H04B 1/707**

(21) Application number: **02250053.2**

(22) Date of filing: **04.01.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **05.01.2001 JP 2001000803**

(71) Applicant: **NEC CORPORATION**
**Tokyo (JP)**

(72) Inventor: **Muramoto, Kimio,**
**NEC IC Microcomputer Systems, Ltd**
**Kawasaki-shi, Kanagawa (JP)**

(74) Representative: **W.P. THOMPSON & CO.**
**Celcon House**
**289-293 High Holborn**
**London WC1V 7HU (GB)**

(54) **Synchronization timing correcting circuit and method**

(57)     Means (108) for judging an amount of deviation compares correlation values from respective correlating devices $105_1$ to $105_8$ with one another to detect a deviation amount and a deviation direction of a frequency central value currently set from a synchronization timing at which the maximum correlation value can be obtained and outputs a window position changing signal to window moving means 107. The window moving means 107 performs a change of the central frequency value of a window width on the basis of the window position changing signal from the deviation amount judging means 108. When the correlation value maximum timing moves from the central frequency due to an AFC error, the position of the window itself is moved corresponding to the movement of the correlation value maximum timing so that the correlation value maximum timing is prevented from deviating from the window even when the window width is made narrow.

## FIG. 4

**Description**

The present invention relates to a synchronization timing correcting circuit for correcting the synchronization timing of a base station which has been captured once, and a method therefor, and which is suitable for use in a mobile communication system which uses a Wide-band Code Division Multiple Access (hereinafter, referred to as a W-CDMA) technique.

In recent years, as a communication system for use in a mobile communication system, attention has been paid to the CDMA communication system, which is less subject to interference or obstruction than others. This CDMA system is a system in which a user signal to be transmitted is transmitted in a spread manner as a spreading signal on the transmission side, inverse-spreading being performed by using the same spreading code as the spreading signal to obtain the original user signal on a reception side. For this reason, in the CDMA system, unless synchronization in phase between the spreading code sequences of the transmission side and the reception side is achieved, the inverse-spreading can not be performed on the reception side.

For the above reason, in the CDMA system, a frequency control is performed by using a auto-frequency control (hereinafter, referred to as "AFC") in order to conform the synchronization frequency of the mobile station with the synchronization frequency of the base station. However, the reference frequency etc. of the base station and the mobile station are liable to vary depending on time elapse, temperature change or the like. Therefore, the control for capturing the synchronization of the base station using the AFC is performed in a two-stage manner. That is, two stages of an initial synchronization timing capture (searching) for capturing the synchronization timing of the base station and a synchronization timing correcting (tracking) for correcting the synchronization timing which has been captured once are performed separately.

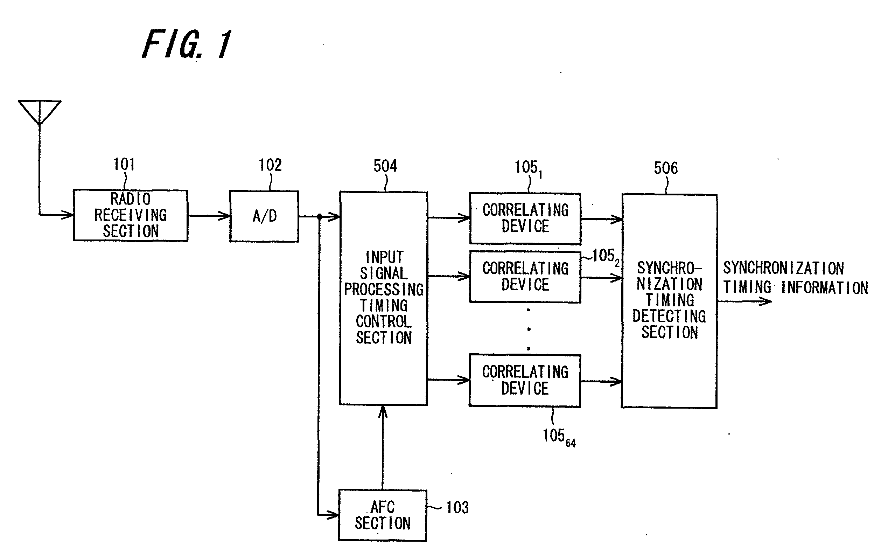

Reference will now be made to Fig. 1 of the accompanying drawings which is a block schematic diagram showing a CDMA receiving apparatus having a previously proposed synchronization timing correcting circuit. This CDMA apparatus includes a radio receiving section 101, an A/D converter 102, an AFC section 103, an input signal processing timing control section 504, 64 correlating devices $105_1$ to $105_{64}$, and a synchronization timing detecting section 506.

The radio receiving section 101 demodulates a radio signal received via an antenna in order to convert it to a base band signal.

The A/D converter 102 converts the base band signal from the radio receiving section 101 to a digital signal by sampling the base band signal at a sampling rate of N times a chip rate.

The AFC section 103 has an input which includes the digital signal from the A/D converter 102 to perform the step of capturing a synchronization timing.

Then, the AFC section 103 outputs the information about the obtained synchronization timing to the input signal processing timing control section 504.

The input signal processing timing control section 504 controls the processing timing of signals from the A/D converter 102 and generates signals from the signals from the A/D converter 102 within the range of ±32 clocks about a central frequency of a synchronization timing captured by the AFC section 103 to output the generated signals into the correlation devices $105_1$ to $105_{64}$, respectively.

The sixty-four correlating devices $105_1$ to $105_{64}$ perform correlation value calculations between the signals whose timings are in the range of ±32 clocks about the central frequency and which are output from the input signal processing timing control section 504 and predetermined spreading codes, respectively. The number of samplings corresponding to this 64 clocks is called "window width". That is, the window means a range where the synchronization timing captured once is monitored.

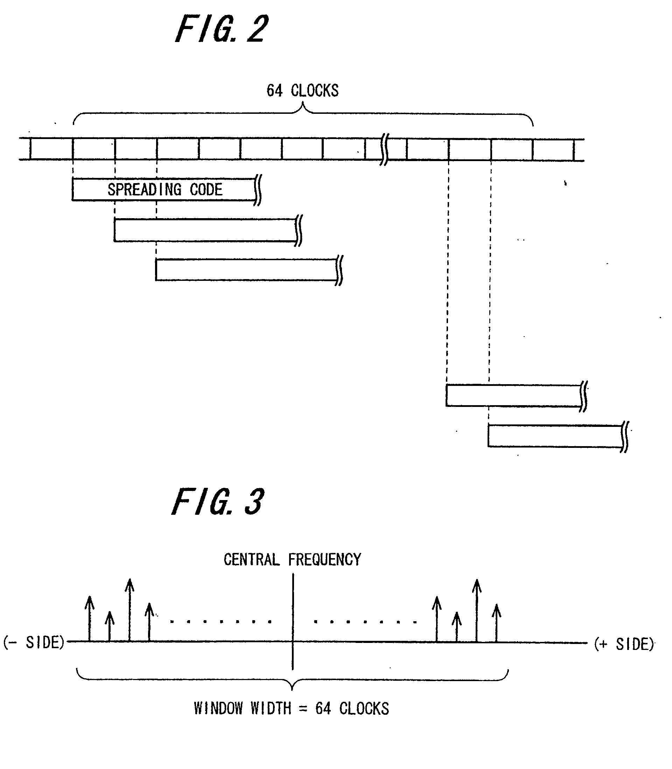

Reference will now be made to Fig. 2 of the accompanying drawings which is a diagram showing that the window width controlled by the input signal processing timing control section 504 is a window of 64 clocks. As shown in Fig. 2, correlation calculations between signals within the range of ±32 clocks about the central frequency and the spreading codes are performed. An image of correlation values obtained from the correlating devices $105_1$ to $105_{64}$ is shown in Fig. 3 of the accompanying drawings.

The synchronization timing detecting section 506 outputs synchronization timing information for transmitting a timing (a correlation value maximum timing) from which the correlation value of the maximum value among the correlation values output from the correlating devices $105_1$ to $105_{64}$ is obtained to the next stage as a synchronization timing. In the next stage, such a processing as an inverse-spreading or a despreading process is performed on the basis of this synchronization timing information.

In this previously proposed synchronization timing correcting circuit, the reason why the window width is set to the 64 clocks is for obtaining the correlation values in all the timings which can be taken within the range of the maximum error where frequency deviation may occur. Specifically, the window width is set according to the following calculation.

For example, in a case in which the longest operation time for which data is captured is 2048 frames (= 20 seconds), it is assumed that the maximum error of 0.1 ppm occurs even when the AFC is locked. When one frame includes 15 time slots, one time slot includes 10 symbols, a spreading rate is 256, and over-sampling of four times is used, the maximum error shift to be estimated becomes $4 \times 256 \times 10 \times 15 \times 2048 \times (0.1 \times 10^{-6}) = 31.5$ clocks. Therefore, when the number of samplings is small, or the window width is narrow, there is a possibility that normal reception can not be achieved. Accordingly, in the previously proposed synchronization timing correcting circuit, the window width is set to 64 clocks in order to obtain all the correlation values in the range of $\pm 64$ clocks about the central frequency. Incidentally, since the range of the maximum error at which a frequency shift occurs varies according to differences in the maximum error in the state that the AFC section has been locked, the number of time slots per frame, the number of over-samplings, the spreading rate or the like. The window width required is not fixed to 64 clocks but it varies.

As explained above, in the previously proposed synchronization timing correcting circuit, such a configuration is employed that the frequency shift due to the error of the AFC is predicted in advance. The correlation values concerning all the timings (the window of the central frequency $\pm 64$ clocks) which may be taken within the range of the maximum error where the frequency shift may occur is obtained so that a timing at which the maximum correlation value can be obtained is selected from the timings as a synchronization timing.

For this reason, in the case in which a circuit scale per one of the correlating devices $105_1$ to $105_{64}$ is 10K gates, the circuit scale of 10K gates x 64 = 640K gates is required in the previously proposed synchronization timing correcting circuit. Also, since it is necessary to perform calculation processing in the respective correlating devices $105_1$ to $105_{64}$, the amount of calculation processing is increased according to an increase in window width.

In the previously proposed synchronization timing correcting circuit, there is a problem that the circuit scale and the amount of calculation processing are increased because correlating devices of a number corresponding to the window width determined in view of the maximum frequency deviation are required.

A feature of arrangements to be described below, by way of example in the belief that they will enable the present invention to be better understood is the provision of a synchronization timing correcting circuit where a window width required can be set to be narrower, and the circuit scale and the amount of calculation processing can be reduced by decreasing the required number of correlating devices.

In a particular arrangement to be described, by way of example in the belief that it will enable the present invention to be better understood there is a synchronization timing correcting circuit for correcting the synchronization timing of a base station which has been once captured, including an input signal processing timing control section which has window moving means for, on the basis of a window position changing signal for instructing a change of a frequency central value of a window defining a range for monitoring a synchronization timing which has been once captured, changing the frequency central value of the window, and which produces signals within the window about the frequency central value set by the window moving means from a signal received from a base station, a plurality of correlating devices which perform correlation values between the signals produced by the input signal processing timing control section and predetermined spreading codes, respectively, and a synchronization timing detecting section which has means for judging the amount of deviation for detecting a deviation amount and a deviation direction of a frequency central value of a window set currently from a synchronization timing which is a timing at which the correlation value becomes maximum by comparing the respective correlation values with one another to determine an amount of movement of the central frequency of the window to be moved on the basis of the deviation amount and the deviation direction, and outputting the movement amount determined to the window moving means as the window position changing signal.

Also, the deviation amount judging means may be configured so as to take an average value of a fixed period between the frequency central value set currently and the synchronization timing and to change the frequency central value of the window when the average value exceeds a predetermined reference value.

Also, the deviation amount judging means may be configured so as to calculate a judgement value Y(n) using a calculation equation

$$Y(n) = Z \times Y(n\text{-}1) + (1 + Z) \times T,$$

where Y(n) is a judgement value which is a criterion about whether or not a frequency central value of a window should be changed, Y(n-1) is the previous judgement value, T is the deviation amount detected, and Z is a calculation coefficient having a value larger than 0 and smaller than 1, and change the frequency central value of the window when the judgement value Y(n) exceeds a predetermined reference value.

Further, the deviation amount judging means may move the frequency central value of the window by one clock or may move it by the deviation amount detected.

In one particular arrangement to be described below, by way of example, in the belief that it will enable the invention to be better understood, when the correlation value maximum timing due to AFC error moves or shifts from the central frequency, the position of the window itself is moved or shifted to correspond to the movement of the correlation value maximum timing so that it is made possible to capture the correlation value maximum timing without the correlation value maximum timing deviating from the window. Accordingly, the window width required can be set to be narrower and the number of correlating devices required can be reduced, thereby reducing the circuit scale and the amount of calculation processing.

The following description and Fig. 4 to 7 of the drawings disclose, by means of examples, the invention which is characterised in the appended claims, whose terms determine the extent of the protection conferred hereby.

In the drawings:-

Fig. 4 is a block schematic circuit diagram showing a configuration of a CDMA receiver provided with a synchronization timing correcting circuit,

Fig. 5 is a flowchart for use in describing the operation of the synchronization timing correcting circuit of the arrangement of Fig. 4,

Fig. 6A and 6B are diagrams for use in describing a timing correcting method when a correlating value maximum timing is moved towards (+side) within a window relative to a central frequency, and

Fig. 7A and 7B are diagrams for use in describing a timing correcting method when a correlating value maximum timing is moved towards (-side) within a window relative to a central frequency.

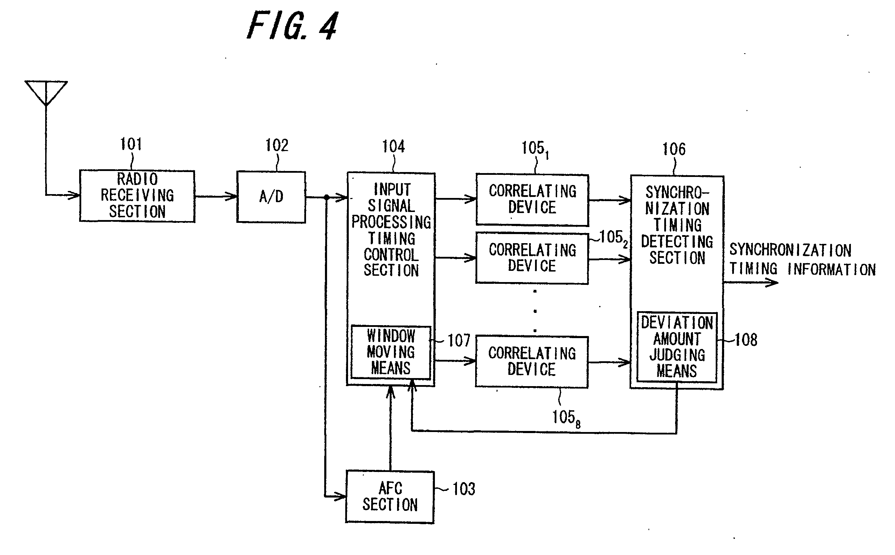

In Fig. 4, the same constituent elements or parts as those shown in Fig. 1 are identified by the same reference numerals as those in Fig. 1 and further explanation of them will be omitted.

A synchronization timing correcting circuit of the arrangement of Fig. 4 includes an input signal processing timing control section 104 provided with a window, moving means 107, correlating devices $105_1$ to $105_8$, and a synchronization timing detecting section 106 provided with deviation amount judging means 108.

The deviation amount judging means 108 detects the deviation amount and the deviation direction of a frequency central value set currently from a synchronization timing (synchronization value maximum timing) at which the maximum correlation value can be obtained by comparing correlation values from the respective correlating devices $105_1$ to $105_8$ with one another, determines the amount of movement of the central frequency of the window on the basis of the deviation amount and the deviation direction, and outputs the movement amount determined to the window moving means 107 in the input signal processing timing control section 104. Here, the deviation amount judging means 108 detects the timing at which the correlation value becomes the maximum by comparing the correlation values from the respective correlating devices $105_1$ to $105_8$ with one another, averages the differences between the current central frequency and the synchronization timing for a fixed period, and judges the deviation amount and the deviation direction on the basis of the averaged value. Then, when the deviation amount exceeds a predetermined reference value, the position of the window is changed.

For example, when the average of the deviation amount over one frame section is obtained, the deviation amounts of fifteen time slots, namely the deviation amounts of fifteen timings are averaged. For example, in the case in which the respective deviation amounts of 15 time slots are 2, 1, 2, 1, 0, 2, 3, 2, 2, 3, 4, 3, 3, 2 and 3, the average of these deviation amounts becomes 2.2. Then, when the reference value for judging whether or not the position of the window should be changed is one clock, the deviation amount judging means 108 carries out a change of the window position.

In this case, the deviation amount judging means 108 may be configured to move the central frequency of the window by two clocks corresponding to the amount of deviation obtained, or to move it by one clock per one change or one movement.

The window moving means 107 performs the change of the frequency central value of the window on the basis of a window position changing signal from the deviation amount judging means 108.

The input signal processing control section 104 does not set the synchronization timing captured by the AFC section 103 as a central frequency but produces signals within a range of ±4 clocks about the central frequency set by the window moving means to output them to the correlating devices $105_1$ to $105_8$.

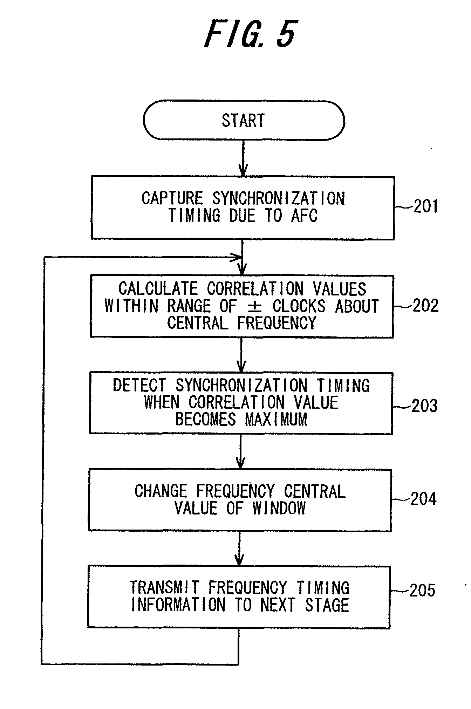

Next, the operation of the synchronization timing correcting circuit will be explained with reference to the flowchart in Fig. 5.

First, the AFC section 103 has input thereto a digital signal from the A/D converter 102 to capture a synchronization timing and output the captured synchronization timing into the input signal processing timing control section 504 (Step 201). Next, the window moving means 107 sets the central frequency of the synchronization timing captured by the AFC section 103 as the central frequency, and the input signal processing timing control section 104 outputs signals within the range of ±4 clocks about the central frequency to the correlating devices $105_1$ to $105_8$ , respectively. Then, the respective correlating devices $105_1$ to $105_8$ perform respective correlation calculations to calculate the correlation values (Step 202).

Next, in the deviation amount judging means 108 in the synchronization timing detecting section 106, a synchronization timing at which the correlation value becomes the maximum is detected on the basis of the respective correlation values from the correlating devices $105_1$ to $1058$, and the synchronization timing is output to the window moving means 107 as a window position changing signal (Step 203). Then, in the window moving means 107, the frequency central value in the window is changed on the basis of the window position changing signal from the deviation amount judging means 108 (Step 204). Also, the synchronization timing information obtained from the synchronization timing detecting section 106 is sent to a circuit of the next stage, where such a processing as an inverse-spreading processing is performed using the synchronization timing information (Step 205).

Even when processing of Steps 202 to 205 is repeated using the central frequency which has been changed in Step 204 so that an error occurs in the AFC and the correlation value maximum timing moves, the position of the window itself is shifted along in the direction in which the correlation value maximum timing moves so that the frequency shift due to an error in AFC or the like can be absorbed even when the window width is narrow.

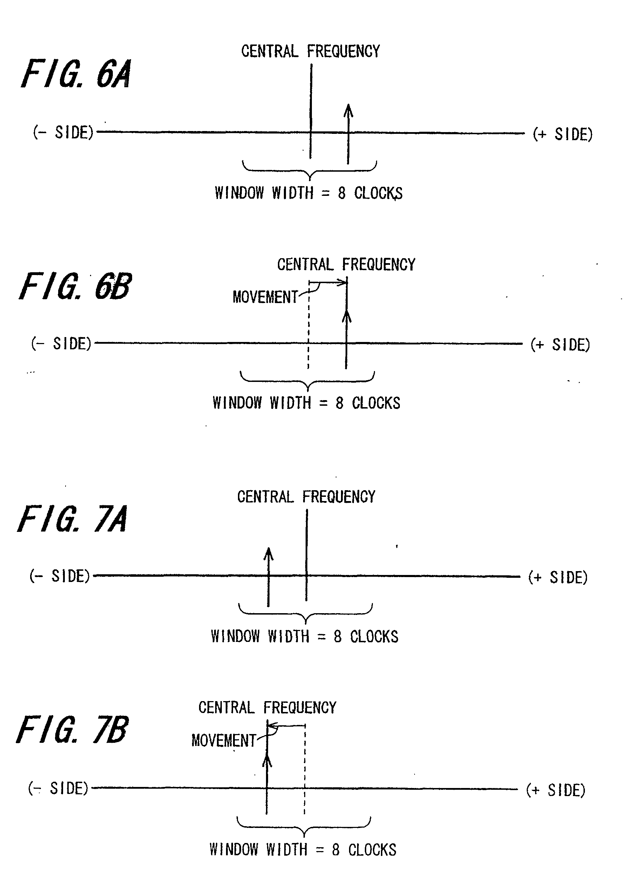

A timing correcting method in which the correlation value maximum timing is moved towards (+side) within the window relative to the central frequency is shown in Figs. 6A and 6B. In the case in which it is judged, from the result of the judgement in the deviation amount judging means 108 in the synchronization timing detecting section 106 shown in Fig. 4, that the correlation value maximum timing has been deviated towards the +side from the central frequency, a window position changing signal is transmitted to the window moving means 107 of the input signal processing timing control section 104 so that the central value of the frequency of the window is changed to the +direction.

A timing correcting method in which the correlation value maximum timing is moved towards (-side) within the window relative to the central frequency is shown in Figs. 7A and 7B. In the case in which it is judged from the judgement result in the deviation amount judging means 108 in the synchronization timing detecting section 106 shown in Fig. 4 that the correlation value maximum timing has been deviated towards the -side from the central frequency, a window position changing signal is transmitted to the window moving means 107 of the input signal processing timing control section 104 so that the frequency central value of the window is changed to the -direction.

In the previously proposed synchronization timing correcting circuit, for example, in the case in which an AFC error occurs in the range of ±32 clocks about the central frequency, a window width = 64 clocks is required. 64 correlating devices are also required. According to the synchronization timing correcting circuit of the arrangement of Fig. 4, for example, even in the case in which the window width = 8 clocks is set, when the correlation value maximum timing moves due to an AFC error from the central frequency, the position of the window (frequency central value) itself is moved so as to correspond to the movement of the correlation value maximum timing so that it is made possible to continue the capturing of the correlation value maximum timing while the correlation value maximum timing is being prevented from moving out of the window.

In a comparison of the circuit scale for this case, in the case in which the circuit scale per one of the correlating devices $105_1$ to $105_{64}$ is 10K gates, a circuit scale of 10K gates x 64 = 640K gates is required in the previously proposed synchronization timing correcting circuit, but a circuit scale required in the synchronization timing correcting circuit of the arrangement of Fig. 4 is only 10K gates x 8 = 80K gates, which results in a reduction of 560K gates.

Also, since parts of the correlating device outputs must be processed in a calculating manner, respectively, the calculation processing is increased according to the increase in the window width. However, since it is made possible to set the window width to be narrow, the amount of calculation processing may be reduced. Furthermore, as mentioned above, because the circuit scale and the amount of calculation processing can be reduced, a reduction in power consumption can be achieved.

Next, a synchronization timing correcting circuit of a second arrangement will be described. The synchronization timing correcting circuit of this second arrangement has almost the same configuration as that of the first arrangement that was described, but both the synchronization timing circuit are different in respect of the judging method for judging the amount of deviation in the deviation amount judging means 108.

The deviation amount judging method in the synchronization timing correcting circuit of this second arrangement will now be described.

In the method for judging the amount of deviation in this second arrangement, the judgement value Y(n), which is a criterion about whether the frequency central value of the window should be changed, is calculated on the basis of the following equation (1), and when the judgement value Y(n) exceeds a predetermined reference value, the frequency central value of the window is changed,

$$Y(n) = Z \times Y(n - 1) + (1-Z) \times T \qquad (1)$$

where Y(n) is a judgement value of this time, Y(n-1) is a judgement value of the previous time, and T is a deviation amount detected. Also, Z is a calculation coefficient, which is a value meeting
Z = calculation coefficient (0.0 < Z < 1.0)

In this arrangement, assuming that an initial value Y(0) of the judgement value is 0, the deviation amount is 1, 2, 3, 4....., and Z =0.6,

$$Y(1) = 0.6 \times Y(0) \ (=0) + 0.4 \times 1 = 0.4$$

$$Y(2) = 0.6 \times Y(1) \ (=0.4) + 0.4 \times 2 = 1.04$$

$$Y(3) = 0.6 \times Y(1) \ (=1.04) + 0.4 \times 3 = 1.824$$

$$Y(4) = 0.6 \times Y(1) \ (=1.824) + 0.4 \times 4 = 2.694$$

Then, when the judgement value Y(n) exceeds the predetermined reference value, the central frequency value of the window is changed, as the first arrangement described. Incidentally, even in this second arrangement, the window position may be shifted once by only ±1 clock unit, or it may be shifted at once by the number of clocks corresponding to the amount of deviation.

In this second arrangement, by making the judgement of the amount of deviation using the above equations, even when a large amount of deviation occurs due to noise or the like, the judgement value can be prevented from increasing rapidly, thereby avoiding an erroneous shifting of the window position.

In the above first and second arrangements, the case in which the window width is set to 8 clocks has been described, but the present invention is not limited to this window width. Even when the window width is set to another value, the present invention is applicable to such a value of window width.

Although particular arrangements have been described, by way of example with reference to the accompanying drawings, in the belief that it will enable the invention to be better understood, it will be appreciated that variations and modifications thereof, as well as other arrangements, may be conceived within the scope of the appended claims.

**Claims**

1. A synchronization timing correcting circuit for correcting the synchronization timing of a base station which has been once captured, including an input signal processing timing control section which has window moving means for, on the basis of a window position changing signal for instructing a change of a central frequency value of a window defining a range for monitoring a synchronization timing which has been once captured, changing the central frequency value of the window, and which produces signals within the window about the central frequency value set by the window moving means from a signal received from a base station, a plurality of correlating devices which perform correlation values between the signals produced by the input signal processing timing control section and predetermined spreading codes, respectively, and a synchronization timing detecting section which has means for judging an amount of deviation for detecting a deviation amount and a deviation direction of a central frequency value of a window set currently from a synchronization timing which is a timing at which the correlation value becomes maximum by comparing the respective correlation values with one another to determine an amount of movement of the central frequency of the window to be moved on the basis of the deviation amount and the deviation direction, and outputting the amount of movement determined to the window moving means as the window position changing signal.

2. A synchronization timing correcting circuit as claimed in claim 1, wherein the amount of deviation judging means takes an average value of differences between a central frequency value set currently and the synchronization timing detected for a fixed period, and when the average value exceeds a predetermined reference value, a change of the central frequency value of the window is made.

3. A synchronization timing correcting circuit as claimed in claim 1, wherein the deviation amount judging means calculates a judgement value Y(n) using

$$Y(n) = Z \times Y(n-1) + (1-Z) \times T,$$

wherein Y(n) is a judgement value which is a criterion related to whether or not the change of the central frequency value of the window should be made, Y(n-1) is the previous judgement value, T is a deviation amount detected, and Z is a calculation coefficient larger than 0 and smaller than 1, and when the judgement value Y(n) exceeds a predetermined reference value, a change of the central frequency value of the window is made.

4. A synchronization timing correcting circuit as claimed in claim 1, wherein the central frequency value is shifted by only one clock with one time change.

5. A synchronization timing correcting circuit as claimed in claim 2, wherein the central frequency value is shifted by only one clock with one time change.

6. A synchronization timing correcting circuit as claimed in claim 3, wherein the central frequency value is shifted by only one clock with one time change.

7. A synchronization timing correcting circuit as claimed in claim 1, wherein the central frequency value is shifted by the deviation amount detected with one time change.

8. A synchronization timing correcting circuit as claimed in claim 2, wherein the central frequency value is shifted by the deviation amount detected with one time change.

9. A synchronization timing correcting circuit as claimed in claim 3, wherein the central frequency value is shifted by the deviation amount detected with one time change.

10. A synchronization timing correcting method for correcting a synchronization timing of a base station which has been captured once, including the steps of producing signals within a window defining a range where the synchronization timing which has been captured once is monitored from a signal received from the base station to output the signals produced, performing calculations of correlation values between the respective produced signals and predetermined spreading codes, respectively, comparing the respective correlation values with one another to detect a deviation amount and a deviation direction of the central frequency value of the window set currently from a synchronization timing which is a timing at which the correlation value becomes the maximum, and determining a deviation amount by which a central frequency of the window is moved on the basis of the deviation amount and the deviation direction to change the central frequency value of the window by the deviation amount determined.

11. A synchronization timing correcting method as claimed in claim 10, wherein the step of detecting the deviation amount and the deviation direction includes a step of taking an average value of the differences between the central frequency value set currently and the synchronization timing detected for a fixed period, and a step of performing a change of the central frequency value of the window when the average value exceeds a predetermined reference value.

12. A synchronization timing correcting method as claimed in claim 10, wherein the step of detecting the deviation amount and the deviation direction includes a step of calculating a judgement value $Y(n)$ using the relationship

$$Y(n) = Z \times Y(n-1) + (1-Z) \times T,$$

where $Y(n)$ is a judgement value which is a criterion related to whether or not the change of the central frequency value of the window should be made, $Y(n-1)$ is the previous judgement value, $T$ is a deviation amount detected, and $Z$ is a circulation coefficient larger than 0 and smaller than 1, and a step of changing the central frequency value of the window, when the judgement value $Y(n)$ exceeds a predetermined reference value.

13. A synchronization timing correcting method as claimed in claim 10, wherein the step of changing the central frequency value of the window moves the central frequency value of the window by only one clock with one time change.

14. A synchronization timing correcting method as claimed in claim 11, wherein the step of changing the central frequency value of the window moves the central frequency value of the window by only one clock with one time change.

15. A synchronization timing correcting method as claimed in claim 12, wherein the step of changing the central frequency value of the window moves the central frequency value of the window by only one clock with one time change.

16. A synchronization timing correcting method as claimed in claim 10, wherein the step of changing the central frequency value of the window moves the central frequency value of the window by the deviation amount detected with one time change.

17. A synchronization timing correcting method as claimed in claim 11, wherein the step of changing the central frequency value of the window moves the central frequency value of the window by the deviation amount detected with one time change.

18. A synchronization timing correcting method as claimed in claim 12, wherein the step of changing the central frequency value of the window moves the central frequency value of the window by the deviation amount detected with one time change.

EP 1 221 774 A1

# FIG. 1

## FIG. 2

64 CLOCKS

SPREADING CODE

## FIG. 3

CENTRAL FREQUENCY

(– SIDE)

(+ SIDE)

WINDOW WIDTH = 64 CLOCKS

FIG. 4

EP 1 221 774 A1

# FIG. 5

START

CAPTURE SYNCHRONIZATION
TIMING DUE TO AFC — 201

CALCULATE CORRELATION VALUES
WITHIN RANGE OF ± CLOCKS ABOUT — 202
CENTRAL FREQUENCY

DETECT SYNCHRONIZATION TIMING
WHEN CORRELATION VALUE — 203
BECOMES MAXIMUM

CHANGE FREQUENCY CENTRAL
VALUE OF WINDOW — 204

TRANSMIT FREQUENCY TIMING
INFORMATION TO NEXT STAGE — 205

FIG. 6A

CENTRAL FREQUENCY

(– SIDE) ——————————————————— (+ SIDE)

WINDOW WIDTH = 8 CLOCKS

FIG. 6B

CENTRAL FREQUENCY

MOVEMENT

(– SIDE) ——————————————————— (+ SIDE)

WINDOW WIDTH = 8 CLOCKS

FIG. 7A

CENTRAL FREQUENCY

(– SIDE) ——————————————————— (+ SIDE)

WINDOW WIDTH = 8 CLOCKS

FIG. 7B

CENTRAL FREQUENCY

MOVEMENT

(– SIDE) ——————————————————— (+ SIDE)

WINDOW WIDTH = 8 CLOCKS

## EUROPEAN SEARCH REPORT

**European Patent Office**

**Application Number**

EP 02 25 0053

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 57819 A (ERICSSON TELEFON AB L M) 11 November 1999 (1999-11-11) * page 3, line 14 - line 23 * * page 4, line 6 - line 16 * * page 9, line 10 - line 25 * * page 13, line 9 - line 13 * * page 16, line 16 - page 17, line 12 * * page 18, line 20 - page 19, line 4 * * page 22, line 9 - page 23, line 2 * * figures 6,12 * | 1-18 | H04B1/707 |
| X | EP 1 041 729 A (FRANCE TELECOM) 4 October 2000 (2000-10-04) * page 7, line 5 - line 8 * * page 8, line 41 - line 43 * * paragraph '0045! - paragraph '0047! * * paragraph '0057! * * page 14, line 37 - line 38 * * page 15, line 29 - line 36 * * paragraph '0093! * * claims 7,11 * | 1-18 | |
| A | US 5 757 870 A (GO ROLAND ET AL) 26 May 1998 (1998-05-26) * column 1, line 34 - column 2, line 11 * * column 2, line 34 - line 41 * * column 3, line 53 - column 4, line 4 * * column 4, line 50 - line 63 * * column 5, line 5 - line 19 * | 1-18 | TECHNICAL FIELDS SEARCHED (Int.Cl.7) H04B |

The present search report has been drawn up for all claims

| Place of search | Date of completion of the search | Examiner |
|---|---|---|
| MUNICH | 18 April 2002 | Draper, A |

**ANNEX TO THE EUROPEAN SEARCH REPORT
ON EUROPEAN PATENT APPLICATION NO.**     EP 02 25 0053

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2002

| Patent document cited in search report | | Publication date | Patent family member(s) | | Publication date |
|---|---|---|---|---|---|
| WO 9957819 | A | 11-11-1999 | AU | 4302699 A | 23-11-1999 |
| | | | CA | 2330926 A1 | 11-11-1999 |
| | | | CN | 1308790 T | 15-08-2001 |
| | | | EP | 1082820 A1 | 14-03-2001 |
| | | | WO | 9957819 A1 | 11-11-1999 |
| | | | TW | 428375 B | 01-04-2001 |
| EP 1041729 | A | 04-10-2000 | FR | 2791495 A1 | 29-09-2000 |
| | | | EP | 1041729 A1 | 04-10-2000 |
| US 5757870 | A | 26-05-1998 | JP | 3142222 B2 | 07-03-2001 |
| | | | JP | 8116293 A | 07-05-1996 |
| | | | EP | 0701333 A2 | 13-03-1996 |
| | | | US | 5818869 A | 06-10-1998 |

EPO FORM P0459

For more details about this annex : see Official Journal of the European Patent Office, No. 12/82